(19) Europäisches Patentamt
European Patent Office
Office européen des brevets

(11) **EP 3 511 785 A1**

(12) **EUROPEAN PATENT APPLICATION**

(43) Date of publication:
**17.07.2019 Bulletin 2019/29**

(51) Int Cl.:
***G05B 17/02*** *(2006.01)*

(21) Application number: **18151434.0**

(22) Date of filing: **12.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Siemens Aktiengesellschaft 80333 München (DE)**

(72) Inventors:
• **Batsiukov, Kiryl 81379 München (DE)**
• **Mogoreanu, Serghei 81827 München (DE)**
• **Murarasu, Alin 81825 München (DE)**
• **Roshchin, Mikhail 81925 München (DE)**

(54) **INDUSTRIAL PROCESS DATA ESTIMATION**

(57) Present invention concerns a method and a system for processing data related to an industrial process. The method comprises steps of acquiring a first parameter related to the industrial process; of acquiring a second parameter related to the industrial process, wherein the second parameter is dependent on the first parameter; of determining a model for a relationship between said parameters on the basis of a plurality of acquisitions of said first and second parameters; and of determining the second parameter for a predetermined value of the first parameter on the basis of said model.

FIG 6

**Description**

An industrial application comprises a machine performing a predetermined task. The machine may for instance be relatively simple like an electric motor, a valve or an electric magnet. In a more complex example, the machine may comprise an injection moulding press, an industrial robot or a bottling plant. The machine may be composed of an arrangement of other machines and several machines may work together to form a system. In order to control the operation of the overall machine or system it is often necessary to control several of its parts. This may be true for machine operation as well as for securing machine availability. To this ends, machine data related to the process may be collected and processed.

An industrial machine may be equipped with one or more contraptions that pick up at least one operational parameter regularly or on an event driven basis. The acquired data may be stored for a predetermined time and processing may take place on stored data. The number of data points taken on an industrial machine has increased lately and may exceed 200 even for a simpler machine like an electric motor, wherein each point represents one operation- or environment-related parameter of the motor. Given a good understanding of the machine, the acquired data may permit determination of complex parameters like a remaining machine life time.

The data picked up from more than one industrial machine may be put to more use through combined data analysis. By comparing performance of machines of similar or the same type employed for different purposes or in different environments, machine stress and component wear out may be analysed. Production data of one machine may be related to that of a different machine on the same plant. Complex and high level data analysis may lead to completely new insights and perspectives.

In many scenarios data concerning the industrial process is insufficient for planning or for estimating process behaviour beyond an observed range in data. It is an objective of present invention to provide automated data estimation for industrial process data. The invention solves the given objective through the subject matter defined in independent claims. Preferred embodiments are given in dependent claims.

Disclosure of the Invention

Present invention concerns a method and a system for processing data related to an industrial process. The method comprises steps of acquiring a first parameter related to the industrial process; of acquiring a second parameter related to the industrial process, wherein the second parameter is dependent on the first parameter; of determining a model for a relationship between said parameters on the basis of a plurality of acquisitions of said first and second parameters; and of determining the second parameter for a predetermined value of the first parameter on the basis of said model.

The first parameter may especially comprise time information and the second parameter may be part of a time series. With present invention, values of the second parameter between or beyond sample points of the second parameter may be determined. This allows for improved process control. In the case of time series data, a forecast for development of said second parameter in the future may be determined. Said determination may also be used to close a data gap that may show up in the series if one or several consecutive acquisitions are missing or not usable. Determination may be offered transparently so that a higher level process may enjoy uninterrupted and/or extrapolated information of the second parameter depending on the given value of the first parameter without actively taking means to perform an estimation. The provided predictions can then be used for reasoning about the process represented by the time series.

The second parameter may be determined in response to a corresponding request. The request may indicate the value of said first parameter, selection or configuration information of the model and/or other information. Accepting the request as well as providing the indicator may be part of a predetermined interface, especially a data and/or control interface between computer processes or applications. Such an interface may also be called application program interface (API). Request and response formats may be well defined and are preferred to be published openly, such as to allow for easy development and use of above-mentioned parameter estimation.

The model may be trained on said plurality of data wherein determining is performed on the trained model. In a first variant of present invention training may be done automatically on the basis of incoming acquisitions of first and second parameters. The model may then reflect the entirety of all previous observations of said parameters. The model may be ready for estimation without further preparation.

Training may comprise acquisitions of said parameters over a predetermined time. By restricting the learning data of the model older, possibly stale training data may become irrelevant over time. In a variant, a predetermined number of acquisitions of said parameters may be used for training, especially if the parameters form a time series.

The acquired parameters are preferred to be stored. The model may be trained on stored data upon the need to perform an estimation, so that possibly needless model training may be avoided. The stored parameters may also be available for other purposes. Should a model prove incorrect or unfortunately chosen, it may be changed against a better suited model which may be trained on stored data. Model change may be done without interrupting prediction capabilities. Also an interactive mode may be supported in which several models or model configurations may be tried on the stored data.

The model may especially comprise a regression model. Regression is well understood and available in a variety of different embodiments. Model training and determination of estimation may be quick and require only moderate computational means.

The regression model may be linear, allowing for fast computation and low system load. Associated quality parameters like a mean, correlation or standard deviation may be easily determined. The uncertainty of a predicted value may thus be provided. Model training may involve determination of a linear function through ordinary least squares fitting, weighted least squares fitting or generalised least squares fitting. Other options may include autoregressive integrated moving average (ARIMA), nonlinear least-squares regression, generalized linear models (GLMs) or regression mixture modelling. Accuracy of a model may be estimated by running the model on a test dataset and determine an overall error like the root mean square error (RMSE). Models can thus be compared for their quality by the error they achieve on the test data.

A plurality of first parameters related to the industrial process may be acquired, wherein the second parameter is depending on said first parameters and the model reflects a relationship between said first parameters and said second parameter. In other words a multivariate regression may be applied as model. Processing the multivariate model may resemble the above mentioned univariate variant.

In yet another embodiment the principles disclosed herein may be extended to a multivariate regression model in which more than one second parameter is depending on one or several first parameters. Such multivariate regression may be linear or nonlinear.

The process may be controlled on the basis of said determined value. A controlling method may use processed data instead of raw data, wherein the controlling method may follow any desired practice.

A system for processing data concerning an industrial process comprises a computing platform, the computing platform having a data interface that is connectable, via a wide area data network, to a physical entity, wherein the physical entity is adapted to provide an acquisition of a parameter that is related to operation of a machine involved in said process and wherein the platform is adapted to carry out a method disclosed herein. The system may thus be used to provide data estimation of one or more parameters that are related to the given industrial process. The process may thus be controlled better; especially the planning of future events like preventive maintenance may be eased or improved. Advantages or features of the system or device may apply to the method and vice versa.

In the system, the physical entity may comprise a data acquisition unit located in a domain where the process is carried out, the data acquisition unit comprising at least one interface connectable to a sensor that is adapted to acquire said parameter. The data acquisition unit may help to collect and provide information relevant for said process.

Brief Summary of the Enclosed Figures

The above-described properties, features and advantages of present invention as well as the way they are achieved will be made clearer and better understandable in the light of the following discussion, making reference to exemplary embodiments shown in accompanying Figures, in which

Figure 1    shows data processing for one or more industrial systems;

Figure 2    shows a flow chart of an exemplary method for processing data of an industrial process;

Figure 3    shows an exemplary block diagram of an interface between services

Figure 4    shows an illustration of linear models for data extrapolation or interpolation

Figure 5    shows an illustration of nonlinear models for data extrapolation or interpolation; and

Figure 6    shows an exemplary data flow.

Detailed Exemplary Embodiments of the Invention

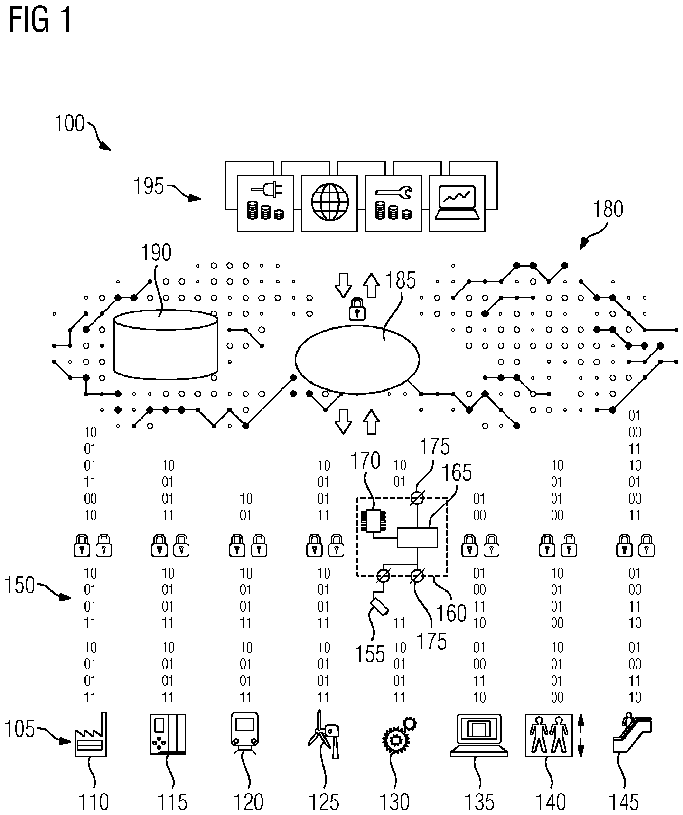

Figure 1 shows a system 100 for data processing for one or more industrial processes 105. Exemplary industrial processes 105 shown in the bottom section of Figure 1 include industrial processing 110, building technology 115, mobility 120, wind power 125, industrial drives 130, health care applications 135, an elevator 140 and an escalator 145. More possible processes 105 include smart city applications, energy management or digital factory. The given selection of industry processes 105 is exemplary and non-limiting. Also, process 105 classification is paradigmatic and a given industrial process 105 may comprise elements of more than one of the given processes 105.

Complexity of a process 105 and deviation of the process 105 from a general approach may differ greatly in different fields. While for instance variance between any two given escalator 145 processes may be limited, process variance in industrial processing 110 may be very high and depend on an object that is to be processed or manufactured. For managing the process 105, high level functionality like determination of expected machinery lifetime, cost factor estimation or supply chain management may require a data model for the process 105 or a class of services 105 the service 105 at hand is part of.

Each process 105 yields data 150 that describes the operation of a technical contraption like a machine, a system, a plant or a production system. Such data may comprise an item count, a speed of movement, acceleration, a temperature, a pressure, a force or torque, a current, a voltage, a distance or any other parameter that is related to the process 105 at hand. Some of the data 150 may already be available in the process 105 in digital form, for instance an ambient temperature that is measured by a different system or a rotational speed requirement. Other data 150 may be sampled with the help of a dedicated sensor 155 and/or a sampling unit 160. The sampling unit 160 may comprise a computational unit 165, local memory 170 and/or interfaces 175 to the contraption at hand, the sensor 155 or a remote data processing entity 180. It is preferred that the machine and/or the sampling unit 165 is adapted to exchange data 150 with the remote data processing entity 180 in encrypted form.

The sampling unit 160 may comprise a microcomputer or microcontroller adapted for digital data processing, especially in the form of the computational unit 165. A method for data processing disclosed herein may be available in form of a computer program product with program code means and the sampling unit 160 may be adapted to implement said method or a part of it by executing the program code means. The computer program product may be stored on a computer readable medium or be transferrable from one system to another by means of a wireless or wire bound data connection.

The processing entity 180 is preferred to implement a service 185 on any desired hardware, especially abstracted from the hardware as a cloud based service 185. This way, the physical location the service 185 is executed at and the physical resources allocated for the service 185 may vary transparently. This may allow for improved resource scaling or location based servicing. The processing entity 180 may comprise a computational unit 165 and/or other elements discussed above with respect to sampling unit 160.

In one preferred option, the service 185 is part of a data processing environment that provides certain functionality for data 150 acquisition, storage, processing or provisioning. A preferred processing environment is known under the name MindSphere. The processing environment may run on top of a cloud service such as AWS (Amazon Web Services) or any other data processing platform.

The service 185 is preferred to have available a storage 190 like a database or a computer file system, especially for data 150. The storage 190 may be implemented on any desired hardware, including semiconductor memory or rotating media magnetic data storage. The storage 190 may itself be implemented as a service, especially a cloud based service, so that from the service's 185 point of view physical constraints or features of the implementation of the storage 190 like maximum capacity or physical location of data holding medium are of no concern and may not even be available. The data 150 is generally time-related in that the reading of a parameter has an associated time which may comprise a date and/or a time. A series of data 150 points over time may form a data series. Information in the storage 190 may be processed, compressed, swapped or dropped after it has been held for longer than a predetermined time or when an available amount of information exceeds a predetermined threshold.

It is proposed to provide the service 185 such that a higher level process 195 may request data 150 and the process 195 returns the requested data 150 in processed or pre-processed form. Request and/or response may be encrypted and/or authenticated. Processing of data 150 may take place after the actual request or at an earlier time after the data 150 is made available. Processed or partly processed data 150 may be stored in storage 190. Data 150 is called raw when it is unaltered from the form it is received from a machine, process 105 or unit 160 by the service 185. Data 150 is called pre-processed after it is made better processable without changing its meaning or context. Pre-processing may for instance identify or remove outliers, mark or fill data gaps, identify or compensate measurement noise or bias. Pre-processing may perform statistical operations on the raw data 150. Data 150 is called processed after several parameters have been combined, deeper statistical analysis has been performed or an altogether new parameter is provided on the basis of existing raw or pre-processed data 150.

The service 185 is preferred to provide pre-processed data on a process 105 to a higher level process 195 via an application program interface (API). Raw and/or processed data 150 may also be made available. The higher level process 195 may not need to worry about basic data processing like data smoothing, outlier detection, noise reduction or key factor determination.

It is proposed that the processing offered by the service 185 will generally be on an abstraction layer that is higher than data sampling and relaying but lower than modelling the underlying industrial process 105. It is especially preferred that the process 195 makes sense of the data 150 in context with a given process 105, while pre-processing or processing of service 185 may be targeted at the data 150 itself, not paying heed to what meaning it carries inside the process 105. Processing of the process 195 may comprise any desired numerical, symbolic or other processing. In one option, the process 195 is designed to provide a visualisation of the data 150, especially for human reception.

In one figurative example an industrial process 105 at hand comprises the fabrication of wooden planks out of timber with a lumber mill with an oscillating saw. Raw data 150 may comprise an oscillation frequency of the saw, the length of wood that has been cut since the last sharpening of the saw blade and the amount of wood that needs to be cut until a predetermined date. The raw data 150 may be pre-processed to be for instance noise-reduced, smoothed or checked to lie within a predetermined range. The data 150 may be further processed to yield a key performance indicator like the lumber mill utilization in per cent. Other processing may comprise trend prediction, calculation of an indirect signal or anomaly detection.

The data 150 provided to the higher level process 195 may form an improved basis on which said process 195 may control the process 105, react on a predetermined condition, relate the process 105 to another process 105 or use external data to gain improved insight or control over the process 105. Such processing generally requires knowledge on the process 105 and its implications and is often done using a mathematical model for said process 105.

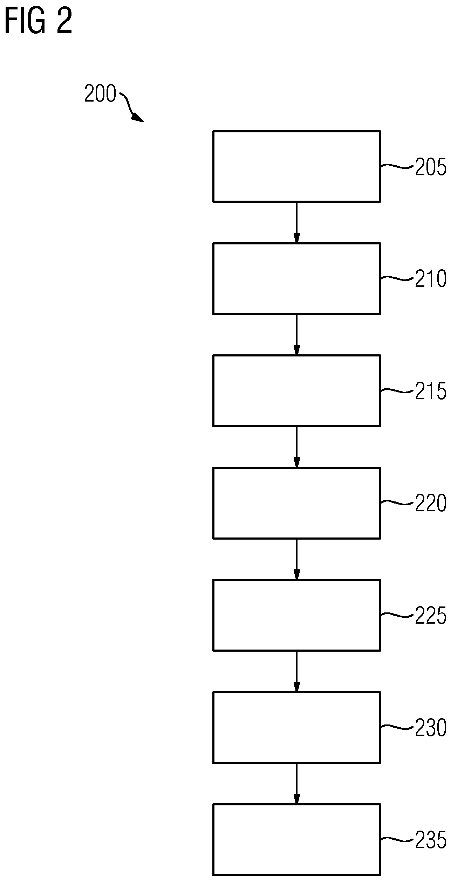

Figure 2 shows a flow chart of a method 200 for processing data concerning an industrial process 105. The method 200 is preferred to be adapted to run on a system 100 of the kind that is described with reference to Figure 1.

In a step 205, a first and a second parameter of the industrial process 105 may be acquired, wherein the second parameter is depending on the first parameter. Acquisition is generally the action of determining and/or providing an information or data 150, which is also called acquisition herein. The first parameter may especially comprise a date and/or time and the second parameter may represent a physical value. Each parameter may comprise a numerical value corresponding to a predetermined unit (like meters), expressing for example a distance. Acquired data 150 may comprise a tuple of said first and second parameters. In some embodiments there are more than one first and/or more than one second parameter.

Acquisition may comprise retrieving digital or analog data 150 that is available in machinery the process 105 is running on or from a device that is controlling the process 105. The industrial process 105 may comprise manufacturing a product on a manufacturing line and acquiring may for example comprise requesting a machine parameter from a production line controller controlling at least one machine on the line and evaluating a response. Acquiring may comprise taking a measurement through use of a sensor 155. The sensor 155 may for instance be adapted to measure an angle, a length, a count, a position, a movement, a speed, acceleration, a current, a voltage, a power, a force, a time, an age or any other kind of physically measurable data 150. The measured parameter is preferred to stand in context with the process 105 and may for instance be part of a machine status or a processing status of an object that is to be manufactured. Acquisition may also comprise reading data 150 from a repository such as a storage 190 or a log file. Should one of the parameters comprise a time its context to the process 105 at hand will naturally be given.

Acquisition may be triggered by polling, i.e. an acquisition request external to the service 185, by an event, e.g. the change of a signal or parameter related to the process 105, or based on time, e.g. after a predetermined time since the last acquisition has elapsed. It is preferred that a plurality of acquisitions may take place simultaneously or in small enough a period of time that temporal correlation between the acquisitions exists. Data 150 is preferred to be formatted in JavaScript Object Notation (JSON) for transmission. Acquired data 150 may be pre-processed locally by a processing unit that is located in the domain of the process 105, like the sampling unit 160, or as part of the service 185, which generally lives in a different place.

In a step 210 the data 150 is preferred to be encrypted and may then be sent to the processing entity 180. Physical location of the processing entity 180 may be dynamic and transparent to external processes so that transfer of the data 150 may require a dynamic routing protocol. In a step 215 the transferred data may be received by the processing entity 180 and decrypted if necessary.

In an optional step 220 the received data 150 is stored, preferably in storage 190 that is available to the processing entity 180 and to the service 185 running on top of it. The data 150 may also be used directly for training a predetermined trend prediction model. In a different embodiment the model may be trained on data that was previously stored.

Data 150 from different processes 105 is preferred to be kept separate, for instance in different database tables and preferably with appropriate access control in place. Data 150 may be automatically deleted from the storage 190 after it has been retrieved for further processing. Data 150 may also be deleted after a predetermined keeping time, wherein different retention times may be defined for different processes 105 or different parameters of one process 105. Data deletion may also be dependent on available storage space (quota) or a state of the process 105. Should for example the process 105 get stopped and restarted, certain associated data 150 may be dropped from the storage 190. Deletion of stored data 150 may also be done upon request of a process 195. The storage 190 may be multi-tier in that is comprises several stages of memory that vary in access time and capacity. Fresh data 150 is generally stored in fast but small memory (e.g. RAM) and over time the data 150 gets pushed into the next slower and larger memory (e.g. a rotating magnetic medium memory, a rotating optical medium or a streaming medium like a magnetic tape).

In an optional step 225 a request for data 150 is received. The request may especially come from a process 195 that is adapted to further process the requested data 150. The request may comprise an indication of a predetermined process 105, one or more values of a first parameter, and/or one or more conditions. It is preferred that a step 230 is then executed to provide an estimation of at least one second parameter on the basis of an employed model and said one or more first parameters. The model may be trained only after the request has been received or at an earlier point in time. In another embodiment provision of the estimation may be done asynchronously so that no request is necessary. This may for example be useful when data 150 acquisition times regularly differ from desired reference times for the second parameter. Such regular determination may be started by the process 195 issuing a data subscription to the service 185, wherein the subscription may comprise the kind and frequency of the desired data 150 as well as the preferred processing.

In one example incoming data 150 may be extrapolated (=predicted) into the future by a predetermined period of time and the result of the extrapolation may be continuously provided to the process 195. Extrapolation time may be zero as long as continuous data 150 is available. Should the incoming data 150 become discontinuous, i.e. if a measurement is missing or arrives out of temporal sequence, surrogate data 150 may be automatically supplied on the basis of previously stored data 150. This way the process 195 may not even be aware of an occurring data gap or other problems with incoming data 150. The process 195 may however be notified about the surrogate nature of provided data 150. As described above, the conditions of automatic processing may be determined by the process 195 and subscription to a predetermined series of data may be configured through a corresponding request.

The conditions under which the estimation is provided may be controllable by process 195. This may comprise model selection and/or configuration. Meta-information on the used model may be provided by service 185, like the number of employed training data sets or certain statistical parameters.

For the model it is especially preferred to use a linear or nonlinear, univariate or multivariate regression model that characterizes parameter relationships in the data 150. The model may be uploaded from the process 195 to the service 185 and then be configured or deleted. The model may support an automatic mode in which it is trained on the basis of time-dependent acquisitions data 150 and then ready for extrapolating or interpolating values for said data 150.

In an optional step 235 a response to the request of 225 may be prepared and provided by service 185. The response may comprise the estimated parameter of data 150 and optionally additional information. The requesting process 195 may then latch onto the provided data 150 and process it further. A result of said estimation may be used to control the process 105. In one option, the process 105 may be directly controlled depending on extrapolated or interpolated data 150.

It is preferred that between processes 195 and 185 an API is defined that allows exchange of data 150 and, in some embodiments, information controlling this exchange or the way the data 150 is provided. The API is preferred to follow the Representational State Transfer (REST) paradigm. The service 185 may especially be realized as a web service and the process 195 may communicate with it over an application protocol like Hypertext Transfer Protocol (HTTP). Exchanged data 150 may be encoded in JSON.

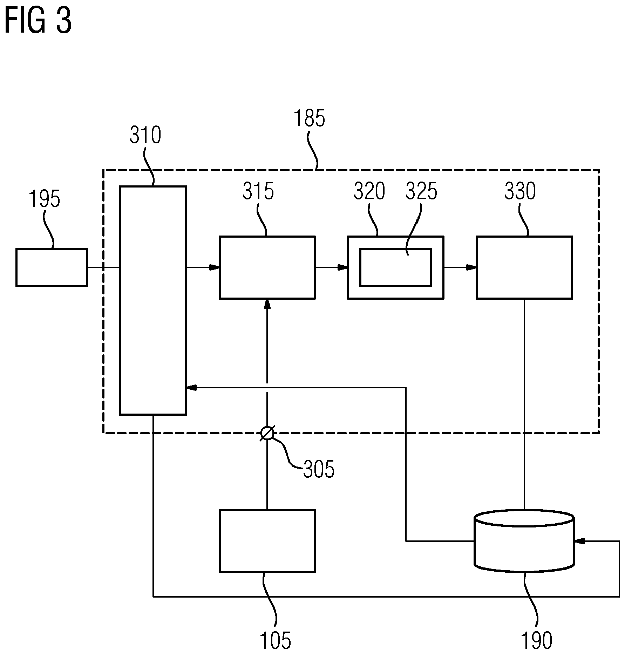

Figure 3 shows an exemplary block diagram of architecture 300 of services 185 and 195 in system 100 of Figure 1. Items displayed in Figure 3 are preferred to be implemented as functional components of service 185 where applicable.

The service 185 has a first interface 305 to the process 105 and a second interface 310 to the process 195. The second interface 310 is preferred to comprise a REST service and furthermore to support at least the POST, GET and DELETE requests. Although REST does not use session states a token may be used for service access after authentication, which may be based on predetermined credentials. The token may be provided to process 195 by service 185 upon successful authentication. Subsequent requests of the process 195 may require the token to be sent to the service 185 in order to gain access to predetermined service resources like a service function or predetermined data 150. The server 185 may maintain session variables associated to the token. The token may also contain information in plain, scrambled, hashed or encrypted form. The second interface 310 is preferred to support encrypted communication like as on the basis of HTTPS. The process 195 may not require any security scope.

A time series reader 315 is adapted to receive acquisitions of a time series of data 150 of a parameter of process 105 and relay the acquisitions to a trend predictor 320. In order for a predetermined process 195 to cause access of service 185 to said data 150, the process 195 may be required to possess appropriate security scope, which may be enforced through above-mentioned token.

The trend predictor 320 is preferred to adapted to host a model 325 that may be predetermined, selected, uploaded or configured, for instance through process 195. In one embodiment the model 325 may be a configuration of predetermined building blocks.

The trend predictor 320 may be adapted to train a given model 325 in a first mode of operation and to apply the model 325 to acquisitions in a second mode of operation. In some embodiments both modes may be executed in parallel. Depending on the result of applying the model 325 to incoming acquisitions an event may be generated by an event writer 320 and generated events may be forwarded to process 195 and/or stored in storage 190.

Results generated by trend predictor 320 may also be stored in storage 190. Access to data residing in storage 190 is preferred to be controlled such as to prevent unauthorized access. Stored information may be removed from storage 190 after a predetermined length of time, say, about a week, ten days or a month. Should the storage 190 comprise a database, information for different services 195 or different users using the same process 195 may be kept in different database tables. A process 195 or an associated user may only be able to access information from an assigned database table.

Work of the trend predictor 320 may take place in processing memory available to service 185 so that no temporary data structure must be persisted. The model 325 may also be represented in memory and get deleted when a corresponding analysis ends.

A notification of an event may also be generated and provided to an interested party, for instance process 195, for asynchronous operation. The interface 310 may be used for event notification. Raw or processed data 150 from the process 105 may be made available through said interface 310. Optionally, selected data 150 stored in storage 190 may be deleted through the interface 310. Logging of events or intermediate data may be supported. Apart from this, logging of authorization or authentication services for gaining access to service 185 may be employed.

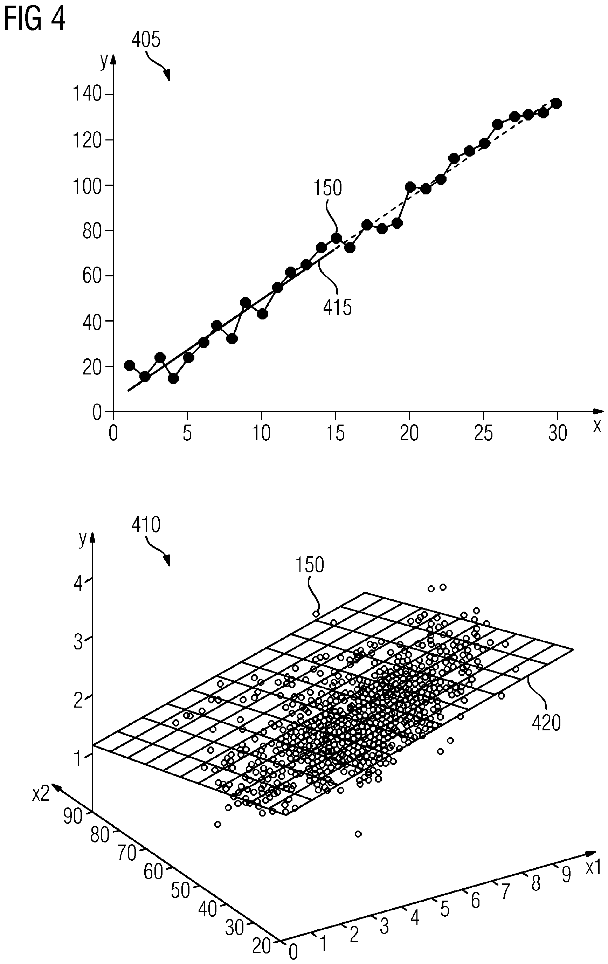

Figure 4 shows an illustration of linear models for data 150 extrapolation or interpolation. A first illustration 405 concerns data 150 with one independent variable (univariate data 150) and a second illustration 410 data 150 with several independent variables (multivariate data 150, in present example with a multitude of two). A linear regression line 415 is shown for the first illustration 405 and a linear regression plane 420 for the second illustration 410. A dependent variable y is plotted in vertical direction in both illustrations 405, 410; independent variables $x_i$ are shown in horizontal direction and in a direction extending from the observer, respectively. The regressions 415, 420 allow determination of the dependent variable y between or beyond data points of independent variables $x_i$. In a case where an independent variable $x_i$ comprises time, an assertion about the dependent variable y may be made for the future.

Univariate linear regression assumes a linear dependence between a single dependent target variable y and m independent variables $x_1$, $x_2$, $\cdots$, $x_m$. The relationship is given by $y = \beta_0 + \beta_1 x_1 + \beta_2 x_2 + \cdots + \beta_m x_m$. For a single independent variable above expression is simplified to $y = \beta_0 + \beta_1 x$. While not very complex, the approach has proven to be a powerful method for early detection of the potential faults. The results produced by the algorithm are both easy to interpret and visualize.

For computer implementation of a regression a code library may be used. Such a library may be available to a web server that may be part of service 185, for example in the case of the Apache webserver the Apache Commons Math module, in which a function called SimpleRegression is predefined. For multivariate linear regression another function called OLSMulti-pleLinearRegression may be used. In present variant, the multivariate algorithm expects that all of the input variables are available at all times. Should any $x_i$ be missing, an appropriate interpolation or other surrogate may be applied.

The results of a linear regression may be easy to interpret in a visualisation in either two or three dimensions. Produced results may be utilized by further analytical tasks, especially of process 195. It may also be relatively easy to generalize the applied linear regression to make the approach robust to outliers.

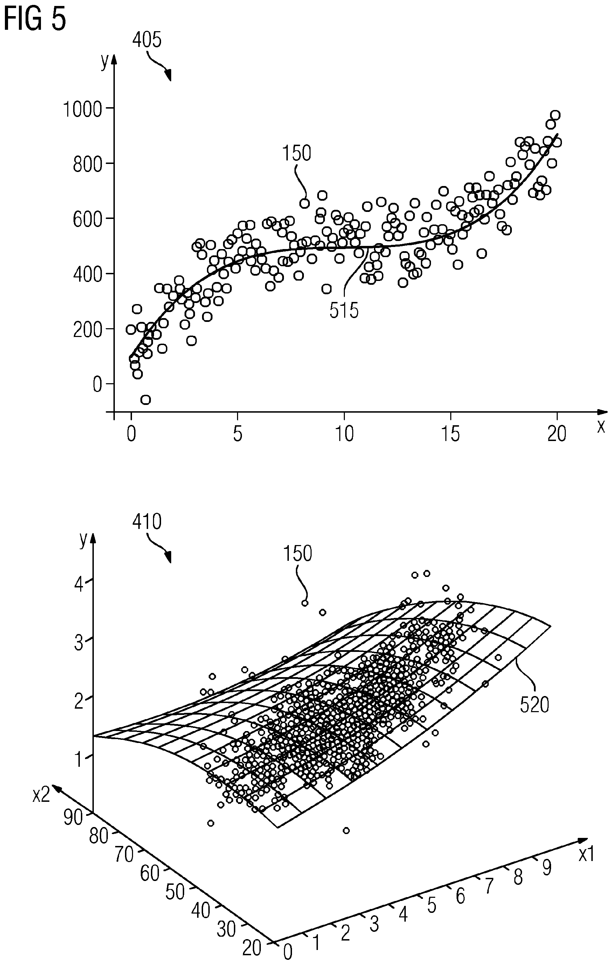

Figure 5 shows an illustration of nonlinear models for data 150 extrapolation or interpolation. In contrast to the approach discussed above with reference to Figure 4, nonlinear regressions are used. A first illustration 505 concerns data 150 with one independent variable (univariate data 150) and a second illustration 510 data 150 with several independent variables (multivariate data 150, in present example with a multitude of two). A nonlinear regression line 515 is shown for the first illustration 405 and a nonlinear regression plane 520 for the second illustration 410. Polynomial regression is able to capture more complex relationships between the variables than linear regression. Given a reasonable choice of the degree of polynomial may produce more accurate results.

The nonlinear univariate regression assumes a nonlinear dependence between a single target variable and one or several independent variables. This kind of regression is proposed to be used here be polynomial with a predetermined degree d. This approach may capture more complex relationships between the variables than a linear model at the expense of an increased computational complexity and a need of specifying the degree d of a polynomial to be fitted. For a single independent variable y and m independent variables $x_1, x_2, \cdots, x_m$ the relationship is given by $y = \beta_0 + \beta_1 x + \beta_2 x^2 + \cdots + \beta_m x^m$. For d=2, m=3 the relationship is given by $y = \beta_0 + \beta_1 x_1^2 + \beta_2 x_2^2 + \beta_3 x_3^2 + \beta_{12} x_1 x_2 + \beta_{13} x_1 x_3 + \beta_{23} x_2 x_3$.

Like for linear regression, use of an existing library may be made. For above mentioned Apache Commons Math module a function called PolynomialFitter is available for univariate regression and another function called OLSMulitplePolynomialRe-gression for multivariate regression. These functions may operate on multisets which can be obtained with an appropriate generator. In present variant, the multivariate algorithm expects that all of the input variables are available at all times. Should any $x_i$ be missing, an appropriate interpolation or other surrogate may be applied.

It should be noted that polynomial regression requires an additional user-supplied parameter i.e. the dimension d. Polynomial regression is generally more computation-intense than linear regression. For determination, additional features may have to be determined and stored, such as $x_1 x_2, x_1^2, x_1 x_2^2 x_3$ etc. The suggested functions expect the data 150 is complete in the sense of all of the independent variables $x_i$ being available at all times. That is, the parameters $x_i$ of data 150 must be synchronized. In order to make a prediction, the values for all of the independent variables must be specified.

Definition of the model specific parameters may require an input from a domain expert. Regression is preferred to work on numerical rather than on symbolic information. Prediction results generally become less precise the "further" (e.g., in time) they are made from the existing points. Regression may be susceptible to outliers and yield inaccurate results on an unluckily chosen set of data 150. Regression may be restricted to work on small datasets in an interactive mode where response time is important.

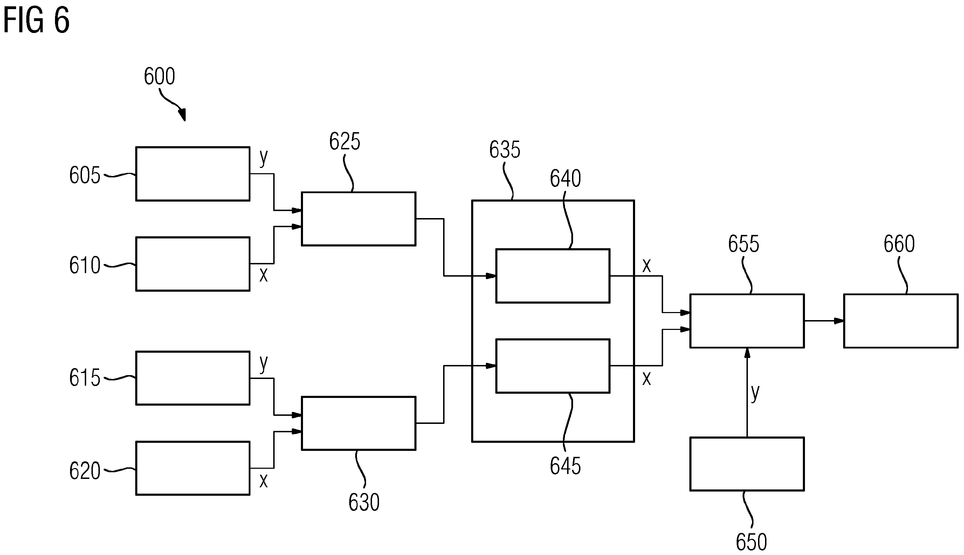

Figure 6 shows an exemplary data 150 flow 600. It is assumed that time series of different parameters of one process 105 are provided as data 150. In present example the process 105 comprises energy provision with a turbine and the data 150 is sampled from said turbine. Exemplary data 150 shown here comprises a temperature 605, time data 610 associated thereto, a pressure 615 and time data 620 associated thereto. The temperature 605 data, together with the time data 610, undergo a first linear univariate regression 625 and the pressure data 615, along with the time data 620, undergo a second univariate regression 630. Results of these regressions are part of a first exemplary intermediate result 635 that comprises a time-dependant temperature 640 and a time-dependant pressure 645.

These results are enriched with more process 105 data 150 in the shape of turbine output 650 information and fed into a multivariate regression 655, which yields a prediction 660 for turbine output.

In present example several regressions are applied, some of them are in cascade. However, any part of the shown data flow 600 may be taken separate or in combination with any desired processing steps, including, but not necessarily, regressions. In one embodiment of present invention several processing blocks may be configured in a predetermined layout like the exemplary layout shown in Figure 6 and only a desired result will be forwarded to process 195. Intermediate data like the intermediate result 635 may be provided upon request.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

**Claims**

1. Method (200) for processing data (150) concerning an industrial process, the method (200) comprising steps of:

   - acquiring (205) a first parameter related to the industrial process (105);
   - acquiring (205) a second parameter related to the industrial process (105), wherein the second parameter is dependent on the first parameter;
   - determining (230) a model (325) for a relationship between said parameters on the basis of a plurality of acquisitions of said first and second parameters; and
   - determining (230) the second parameter for a predetermined value of the first parameter on the basis of said model (325).

2. Method (200) according to claim 1, wherein the second parameter is determined in response to a corresponding request.

3. Method (200) according to claim 1 or 2, wherein the model (325) is trained on said plurality of data and determining is performed on the trained model (325).

4. Method (200) according to claim 3, wherein training comprises acquisitions of said parameters over a predetermined time.

5. Method (200) according to one of the previous claims, wherein acquired parameters are stored.

6. Method (200) according to one of the previous claims, wherein the model (325) comprises a regression model (325) .

7. Method (200) according to one of the previous claims, wherein the regression model (325) is linear.

8.  Method (200) according to one of the previous claims, wherein the regression model (325) is polynomial.

9.  Method (200) according to one of the previous claims, wherein a plurality of first parameters related to the industrial process (105) are acquired, the second parameter is depending on said first parameters and the model (325) reflects a relationship between said first parameters and said second parameter.

10. Method (200) according to one of the previous claims, wherein the process (105) is controlled (235) on the basis of said determined value.

11. System (100) for processing data (150) concerning an industrial process (105), the system comprising:

    - a computing platform (180);
    - the computing platform (180) having a data interface that is connectable, via a wide area data network, to a physical entity (160);
    - wherein the physical entity (160) is adapted to provide an acquisition of a parameter that is related to operation of a machine involved in said process (105);
    - wherein the platform (180) is adapted to carry out a method (200) according to one of the above claims.

12. System (100) according to claim 11, wherein the physical entity comprises a data acquisition unit (160) located in a domain where the process (105) is carried out, the data (150) acquisition unit (160) comprising at least one interface (175) connectable to a sensor (155) that is adapted to acquire said parameter.

FIG 1

# FIG 2

200

FIG 3

# FIG 4

FIG 5

FIG 6

Europäisches
Patentamt

European
Patent Office

Office européen
des brevets

# EUROPEAN SEARCH REPORT

**Application Number**

EP 18 15 1434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/093892 A1 (KANT RAVI [US] ET AL) 9 April 2009 (2009-04-09) * paragraphs [0017] - [0019], [0051] - [0052] * ----- | 1-12 | INV. G05B17/02 |
| X | US 2004/148144 A1 (MARTIN GREGORY D [US]) 29 July 2004 (2004-07-29) * paragraphs [0020], [0027] - [0029] * ----- | 1-12 | |
| X | US 2009/076773 A1 (DONG HONGBIN [US] ET AL) 19 March 2009 (2009-03-19) * paragraphs [0004] - [0011], [0051] - [0064] * ----- | 1-12 | |
| X | US 2017/068886 A1 (CHENG XU [US]) 9 March 2017 (2017-03-09) * paragraphs [0013] - [0015] * ----- | 1-12 | |

**TECHNICAL FIELDS SEARCHED (IPC)**

G05B

The present search report has been drawn up for all claims

| Place of search | Date of completion of the search | Examiner |
|---|---|---|
| The Hague | 9 July 2018 | José Luis Meseguer |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 15 1434

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2018

| Patent document cited in search report | Publication date | Patent family member(s) | Publication date |
|---|---|---|---|
| US 2009093892 A1 | 09-04-2009 | US 2009093892 A1<br>WO 2009046197 A1 | 09-04-2009<br>09-04-2009 |
| US 2004148144 A1 | 29-07-2004 | EP 1441268 A1<br>US 2004148144 A1 | 28-07-2004<br>29-07-2004 |
| US 2009076773 A1 | 19-03-2009 | NONE | |
| US 2017068886 A1 | 09-03-2017 | CA 2940636 A1<br>CN 106842909 A<br>DE 102016116906 A1<br>GB 2543144 A<br>PH 12016000300 A1<br>US 2017068886 A1 | 09-03-2017<br>13-06-2017<br>09-03-2017<br>12-04-2017<br>23-04-2018<br>09-03-2017 |

EPO FORM P0459

For more details about this annex : see Official Journal of the European Patent Office, No. 12/82